(19) **Europäisches Patentamt**
**European Patent Office**
**Office européen des brevets**

(11) **EP 3 208 719 A1**

(12) **EUROPEAN PATENT APPLICATION**
published in accordance with Art. 153(4) EPC

(43) Date of publication:
**23.08.2017 Bulletin 2017/34**

(21) Application number: **15851335.8**

(22) Date of filing: **06.08.2015**

(51) Int Cl.:
*G06F 13/00* (2006.01)     *A63F 13/213* (2014.01)
*A63F 13/31* (2014.01)      *A63F 13/52* (2014.01)
*A63F 13/53* (2014.01)

(86) International application number:
**PCT/JP2015/072397**

(87) International publication number:
**WO 2016/059857 (21.04.2016 Gazette 2016/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.10.2014 JP 2014211374**

(71) Applicant: **Sony Corporation**
**Tokyo 108-0075 (JP)**

(72) Inventors:
• **KURITA, Teppei**
**Tokyo 108-0075 (JP)**

• **MITSUNAGA, Tomoo**
**Tokyo 108-0075 (JP)**
• **JO, Kensei**
**Tokyo**
**108-0075 (JP)**
• **SATO, Makoto**
**Tokyo 108-0075 (JP)**
• **IDA, Kentaro**
**Tokyo 108-0075 (JP)**
• **NARITA, Tomoya**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, SYSTEM, AND INFORMATION PROCESSING METHOD**

(57) [Object]
To simplify a procedure of an action between users in a virtual space.
[Solution]
Provided is an information processing device including: a display control unit configured to display an image of a virtual space in which a first user acts; an action information generation unit configured to generate action information indicating an action from the first user to a second user in the virtual space; and a light modulation control unit configured to control modulation of light for displaying the image of the virtual space according to the action information. There is provided an information processing device including: a captured image acquisition unit configured to acquire a captured image including a screen of a device displaying a first image; an action information extraction unit configured to extract action information from modulation of light in a part of the screen of the captured image; a response processing unit configured to perform a process in which the second user responds to the action; and a display control unit configured to display a second image of the virtual space in which the second user acts according to a result of the process.

FIG. 3

**Description**

Technical Field

The present technology relates to an information processing device, a system, and an information processing method.

Background Art

In recent years, with an advance in network communication technologies, virtual spaces on networks on which a plurality of users all act are provided as, for example, contents of games or social media. For example, in network games, users generally compete or form parties to play in virtual spaces. For example, Patent Literature 1 discloses a technology for enabling smooth recruitment by referring to proficiency of other users when host users recruit users for playing together or surrogate users in such network games.

Citation List

Patent Literature

Patent Literature 1: JP 2013-94386A

Disclosure of Invention

Technical Problem

However, in actions between users in virtual spaces such as decisions of competing partners or recruitment of party members, for example, complication was felt more than in actions of real spaces in many cases. For example, when party members are recruited, a step of enabling a host user to start recruiting party members, a step of enabling other users to express participation in the party, and a step of enabling the host user to approve of participation of the other users in the party are all performed through user manipulation. Therefore, host user play can also be interrupted, for example, until the host user starts recruiting party members and the members get together. The technology disclosed in Patent Literature 1 or the like may not resolve such complication.
Accordingly, the present disclosure proposes a novel and improved information processing device, a novel and improved system, and a novel and improved information processing method capable of simplifying a procedure of an action between users in a virtual space.

Solution to Problem

According to the present disclosure, there is provided an information processing device including: a display control unit configured to display an image of a virtual space in which a first user acts; an action information generation unit configured to generate action information indicating an action from the first user to a second user in the virtual space; and a light modulation control unit configured to control modulation of light for displaying the image of the virtual space according to the action information.
In addition, according to the present disclosure, there is provided an information processing device including: a captured image acquisition unit configured to acquire a captured image including a screen of an external device displaying a first image of a virtual space in which a first user acts; an action information extraction unit configured to extract action information indicating an action from the first user to a second user in the virtual space, from modulation of light of the captured image in a part of the screen; a response processing unit configured to perform a process in which the second user responds to the action; and a display control unit configured to display a second image of the virtual space in which the second user acts according to a result of the process.
In addition, according to the present disclosure, there is provided a system including: a first information processing device including a display control unit configured to display a first image of a virtual space in which a first user acts, an action information generation unit configured to generate action information indicating an action from the first user to a second user in the virtual space, and a light modulation control unit configured to control modulation of light for displaying the first image according to the action information; and a second information processing device including a captured image acquisition unit configured to acquire a captured image including a screen of a device displaying the first image, an action information extraction unit configured to extract the action information from modulation of light of the captured image in a part of the screen, a response processing unit configured to perform a process in which the second user responds to the action, and a display control unit configured to display a second image of the virtual space in which the second user acts according to a result of the process.

In addition, according to the present disclosure, there is provided an information processing method including: displaying a first image of a virtual space in which a first user acts; generating action information indicating an action from the first user to a second user in the virtual space; controlling, by a processor, modulation of light for displaying the first image according to the action information; acquiring a captured image including a screen of a device displaying the first image; extracting the action information from modulation of light of the captured image in a part of the screen; performing a process in which the second user responds to the action; and displaying a second image of the virtual space in which the second user acts according to a result of the process.

Advantageous Effects of Invention

According to the present disclosure, as described above, it is possible to simplify a procedure of an action between users in a virtual space.

Note that the effects described above are not necessarily limitative. With or in the place of the above effects, there may be achieved any one of the effects described in this specification or other effects that may be grasped from this specification.

Brief Description of Drawings

[FIG. 1] FIG. 1 is a diagram illustrating a schematic configuration of a system according to a first embodiment of the present disclosure.
[FIG. 2] FIG. 2 is a block diagram illustrating functional configurations of a game device and a server according to the first embodiment of the present disclosure.
[FIG. 3] FIG. 3 is a block diagram illustrating an extracted functional configuration related to a procedure for realizing an action between users from the functional configuration of the game device according to the first embodiment of the present disclosure.
[FIG. 4] FIG. 4 is a diagram for describing a second example of a modulation scheme according to the first embodiment of the present disclosure.
[FIG. 5] FIG. 5 is a diagram for describing a third example of a modulation scheme according to the first embodiment of the present disclosure.
[FIG. 6] FIG. 6 is a diagram for describing a fourth example of a modulation scheme according to the first embodiment of the present disclosure.
[FIG. 7] FIG. 7 is a diagram for describing a first example of a modulation scheme according to the first embodiment of the present disclosure.
[FIG. 8] FIG. 8 is a diagram for describing an example of a process sequence according to the first embodiment of the present disclosure.
[FIG. 9] FIG. 9 is a diagram illustrating a schematic configuration of a system according to a second embodiment of the present disclosure.
[FIG. 10] FIG. 10 is a block diagram illustrating a functional configuration of a game device according to the second embodiment of the present disclosure.
[FIG. 11] FIG. 11 is a diagram for describing an example of a process sequence according to the second embodiment of the present disclosure.
[FIG. 12] FIG. 12 is a diagram illustrating a schematic configuration of a system according to a third embodiment of the present disclosure.
[FIG. 13] FIG. 13 is a diagram illustrating a schematic configuration of a system according to a fourth embodiment of the present disclosure.
[FIG. 14] FIG. 14 is a diagram for describing an example of a process sequence according to the fourth embodiment of the present disclosure.
[FIG. 15] FIG. 15 is a diagram exemplifying a relation between devices according to the fourth embodiment of the present invention.
[FIG. 16] FIG. 16 is a block diagram illustrating a hardware configuration example of an information processing device according to the embodiment of the present disclosure.

Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Also, the description will be made in the following order.

1. First embodiment
1-1. System configuration
1-2. Examples of modulation scheme
1-3. Example of process sequence
2. Second embodiment
2-1. System configuration
2-2. Example of process sequence
3. Third embodiment
4. Fourth embodiment
4-1. System configuration
4-2. Example of process sequence
5. Hardware configuration
6. Supplement

(1. First embodiment)

(1-1. System configuration)

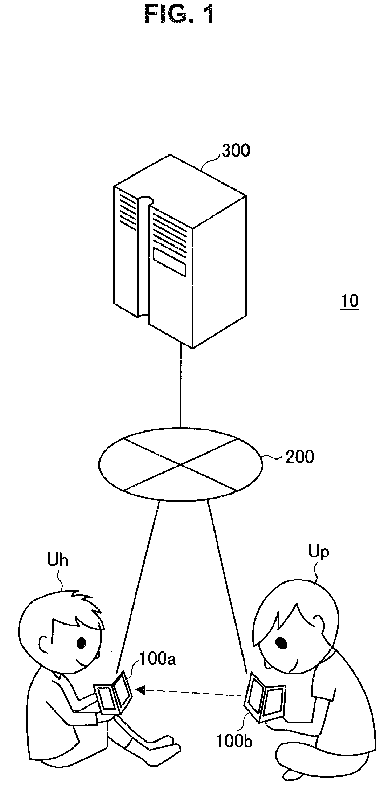

FIG. 1 is a diagram illustrating a schematic configuration of a system according to a first embodiment of the present disclosure. Referring to FIG. 1, a system 10 includes a game device 100a of a host user Uh, a game device 100b of a participation user Up, and a server 300. The game devices 100a and 100b can be realized by a hardware configuration of an information processing device to be described below. In addition, the server 300 can include one server device or a plurality of server devices realized by the hardware configuration of the information processing device to be described below. The game devices 100a and 100b and the server 300 are connected to each other by a network 200 such as the Internet.

In the embodiment, the host user Uh and the participation user Up are close to each other. The participation user Up can photograph a screen of the game device 100a of the host user Uh using a camera (imaging device) installed on the rear surface of the game device 100b. The host user Uh is playing a network game using the game device 100a. Here, the host user Uh is assumed to invite the participation user Up in front of the host user Uh to participate in a party for a network game.

When the invitation to such a party is performed through, for example, only communication between the game devices 100a and 100b and the server 300, a procedure of several steps via the server 300 is necessary even in a situation in which the users are close to each other. More specifically, a procedure such as the host user Uh manipulating the game device 100a and starting to recruit party members, the participation user Up manipulating the game device 100b, referring to the recruitment of the party member, and expressing an intent to participate in the party, and the host user Uh approving the expression of an intent to participate in the party by the participation user Up is necessary.

Such a procedure unavoidably arises, for example, when a virtual space of a network game provided by the server 300 is open to an unspecified large number of users. When the participation user Up has already played the same network game using the game device 100b, the host user Uh can also nominate the participation user Up and invite the participation user Up to participate in the party. However, even in this case, there is no change in that a procedure of several steps via the server 300 is necessary in order that the host user Uh inputs identification information regarding the participation user Up or confirms whether the participation user Up accepts the invitation.

In the embodiment, to simplify the foregoing procedure, action information indicating an action from the host user Uh to the participation user Up (an invitation to the party) is transferred through visible light communication between the game devices 100a and 100b. More specifically, the game device 100a modulates light for displaying an image of a virtual space on a screen according to the action information according to a manipulation by the host user Uh. This light has already been modulated to correspond to the image of the virtual space and modulation according to the action information is applied so that the action information is superimposed on the light.

For example, the game device 100a may superimpose and display a code obtained by encoding the action information on a part of the image of the virtual space by spatially modulating the light. In addition, the game device 100a may express the action information by temporally modulating luminance and/or chromaticity of the light. In this case, when the modulation of the luminance and/or chromaticity is performed minutely at high speed so as not to be perceived by the users, the modulation rarely affects visual recognition of the image of the virtual space by the users. The action information transferred in this way can include, for example, information for identifying the network game played using the game device 100a and identification information regarding the host user Uh and the party.

On the other hand, a camera (imaging device) installed on the rear surface of the game device 100b acquires a captured image including a screen of the game device 100a. The game device 100b can extract the foregoing action information from the modulation of the light of a screen portion of the game device 100a included in the captured image. Based on the extracted action information, the game device 100b performs a process of allowing the participation user Up to participate in the party of the host user Uh in the virtual space of the network game. For example, when the participation user Up has not yet played the network game, the game device 100b activates a client program of the network game and transmits a login command to the server 300. Further, the game device 100b transmits a command for allowing the participation user Up to participate in the party of the host user Uh to the server 300. The command can include, for example, the identification information regarding the host user Uh or the party acquired from the action information.

In accordance with the foregoing procedure, the participation user Up can play the network game using the game device 100b in a state in which the participation user Up participates in the party of the host user Uh. In the procedure, after the host user Uh first performs a manipulation to invite the participation user Up to participate in the party, the participation user Up may view a screen of the game device 100a. In the embodiment, even when information is transmitted through modulation of light, the host user Uh can perform the manipulation and subsequently continue playing the network game in the virtual space using the game device 100a without waiting for the completion of a process for the participation user Up to participate in the party since a part of the code of the image displayed with the game device 100a is hidden with superimposition display and the luminance and/or chromaticity of the image is temporally changed (for example, minutely at high speed so as not to be perceived by the user).

On the other hand, since the party and the host user Uh are specified in the game device 100b used by the participation user Up based on a captured image including a screen of the game device 100a, it is not necessary for the participation user Up to search for the host user Uh or the party. In addition, it is understood that the host user Uh approves of the participation of the participation user Up in the party at a time point at which the screen of the game device 100a is viewed. Therefore, the participation user Up may not wait for the approval of the host user Uh after the participation user Up expresses an intent to participate in the party.

In this way, in the embodiment, since the procedure in which the host user Uh invites the participation user Up to participate in the party in the virtual space is simplified, the host user Uh or the participation user Up can form the party speedily and start playing the network game. Accordingly, the host user Uh or the participation user Up can focus on the playing of the network game itself.

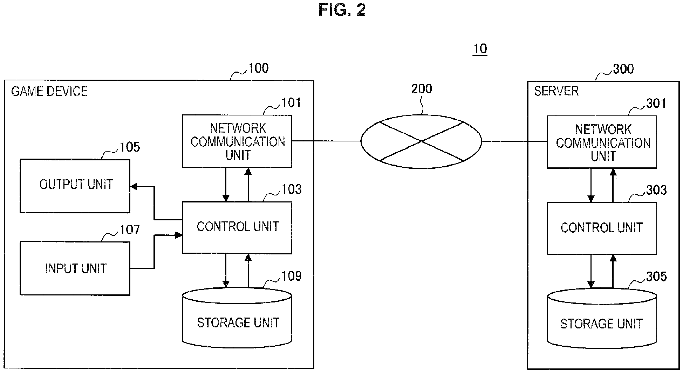

FIG. 2 is a block diagram illustrating functional configurations of the game device and the server according to the first embodiment of the present disclosure. Hereinafter, each functional configuration will be described in more detail with reference to FIG. 2. Also, in FIG. 2, the game device 100a, in common with the game device 100b, is used as the game device 100. This indicates that the roles of the game devices 100a and 100b according to the embodiment are interchangeable. That is, in the embodiment, when the same game device 100 is used by the host user Up, the game device 100 functions as the game device 100a. When the same game device 100 is used by the participation user Up, the game device 100 functions as the game device 100b.

The game device 100 includes a network communication unit 101, a control unit 103, an output unit 105, an input unit 107, and a storage unit 109. The network communication unit 101 includes various communication devices that perform network communication with the server 300. The control unit 103 includes a processor such as a central processing unit (CPU) that controls the entire game device 100. The output unit 105 includes various output devices that output an image, audio, vibration, and the like. The input unit 107 includes various input devices that receive a manipulation on a button or the like by a manipulator, contact on a touch panel, an audio input, or the like as an input. In addition, the input unit 107 includes an imaging device that generates a captured image. The storage unit 109 includes a memory or a storage that temporarily or permanently stores various types of information input to the game device 100 or generated with the game device 100, including a program that operates the control unit 103.

The server 300 includes a network communication unit 301, a control unit 303, and a storage unit 305. The network communication unit 301 includes various communication devices that perform network communication with the game device 100. The control unit 303 includes a processor such as a CPU that controls the entire server 300 and provides a network game service to the game device 100. The storage unit 305 includes a memory or a storage that temporarily or permanently stores user information or the like of the network game, including a program that operates the control unit 303.

The user of the game device 100 can play the network game due to the exchange of various types of information between the foregoing game device 100 and server 300. For example, when the user performs a manipulation input to start a game using the input unit 107 of the game device 100, the control unit 103 activates a client program of the game (the client program is not limited to a dedicated program, but may be a general browser or the like) and transmits a login command of the user to the server 300 via the network communication unit 101.

When the login is successful, the control unit 103 displays an image of the virtual space of the game or outputs audio using the output unit 105 according to information received from the server 300. The user can perform various activities such as movements, speeches, play sports or battle in the virtual space by performing a manipulation input using the input unit 107. For example, a character state of the user disposed in the virtual space or a state of the virtual space itself including other characters is changed in accordance with such an activity. The control unit 103 continuously receives information from the server 300 and continuously outputs audio or an image of the virtual space changed sequentially in accordance with activities or the like of the user of the game device 100 or other users.

Also, various types of network games are already known as network games provided in accordance with the configurations of the foregoing game device 100 and server 300. Accordingly, in the following description, the detailed description of a process performed to provide a network game itself will be omitted. A functional configuration for realizing an action, such as "an invitation to a party," between users known to occur in a network game in a procedure simplified in the above-described embodiment will be particularly described. A functional configuration to be described below can be applied to various network games in which actions between users occur.

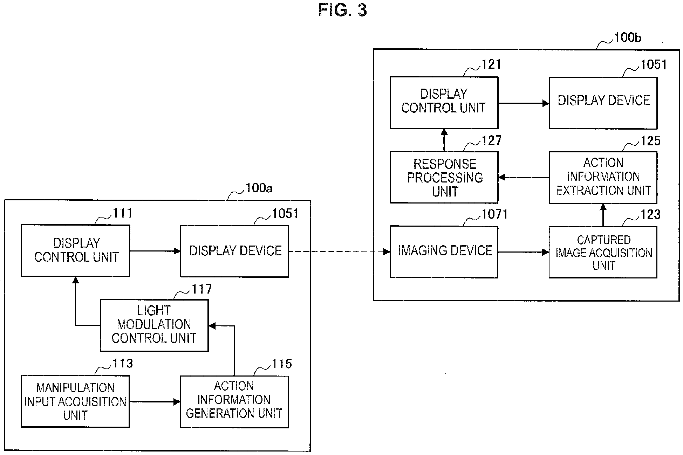

FIG. 3 is a block diagram illustrating an extracted functional configuration related to a procedure for realizing an action between users from the functional configuration of the game device according to the first embodiment of the present disclosure. Referring to FIG. 3, the game device 100a includes a display control unit 111, a manipulation input acquisition unit 113, an action information generation unit 115, and a light modulation control unit 117. The game device 100b includes a display control unit 121, a captured image acquisition unit 123, an action information extraction unit 125, and a response processing unit 127. The functional configurations are all realized as, for example, steps of a program that is executed by the control unit 103 of the game device 100.

(Host user side)

The display control unit 111 displays an image of the virtual space of the network game in which the user (the host user Uh) of the game device 100a acts. More specifically, the display control unit 111 outputs a control signal for driving a display device 1051 included in the output unit 105 according to image data provided from a client program of the network game executed by the control unit 103 based on information received from the server 300. At this time, image data input to the display control unit 111 or a control signal output by the display control unit 111 can be controlled to be superimposed by the light modulation control unit 117.

The manipulation input acquisition unit 113 acquires a manipulation input of the user (the host user Uh) of the game device 100a acting in the virtual space displayed as an image by the display control unit 111. More specifically, the manipulation input acquisition unit 113 acquires a manipulation performed on a button or the like by a manipulator and received by the input unit 107, contact on a touch panel, an audio input, or the like as a manipulation input of the host user Uh related to an activity in the virtual space. The state of the virtual space displayed as the image by the display control unit 111 is changed in accordance with the manipulation input, as described above. In addition, the manipulation input acquired by the manipulation input acquisition unit 113 includes an action instructing an action to another user in the virtual space, for example, an invitation or the like to a party.

When an action to another user in the virtual space is instructed by the manipulation input acquisition unit 113, the action information generation unit 115 generates action information indicating the action. Alternatively, the action information generation unit 115 may automatically generate action information regardless of an instruction acquired by the manipulation input acquisition unit 113. For example, when an action of inviting the members of the party by the host user Uh is instructed by the manipulation input acquisition unit 113, the action information generation unit 115 generates action information including identification information of the party, the host user Uh, and the network game played using the game device 100a. In the embodiment, since the generated action information can be transferred to only the participation user Up through visible light communication, the action information may not include information specifying the participation user Up.

The light modulation control unit 117 controls modulation of light for displaying an image of the virtual space according to the action information generated by the action information generation unit 115. As described above, the game device 100a outputs a control signal used for the display control unit 111 to drive the display device 1051. When the display device 1051 outputs light modulated according to the control signal, the image of the virtual space is displayed. The light modulation control unit 117 modulates light output by the display device 1051 according to the action information by controlling the image data input to the display control unit 111 or the control signal of the display device 1051 output by the display control unit 111 in a superimposed manner (in addition to control for displaying the image of the original virtual space), more specifically, by changing the image data or the control signal. Also, a more specific example of a modulation scheme will be described below.

(Participation user side)

The display control unit 121 displays an image of the virtual space of the network game in which the user (the participation user Up) of the game device 100b acts. More specifically, the display control unit 111 outputs a control signal to drive the display device 1051 included in the output unit 105 according to the image data provided from the client program of the network game executed by the control unit 103 based on information received from the server 300. The virtual space displayed in the game device 100b can be the same as the virtual space in which the host user Uh acts. However, since users who are activity subjects are different, an angle of field, character state display, and the like that mirrors the virtual space can be different between the game devices 100a and 100b.

Here, when a process of the response processing unit 127 is performed, the display control unit 121 displays the image of the virtual space according to a result of the process. For example, when display of the image of the virtual space is not yet started at a time point at which the process of the response processing unit 127 is performed, the display control unit 121 starts displaying the image of the virtual space in accordance with an instruction from the response processing unit 127. In addition, even when the image of the virtual space is already displayed at the time point at which the process of the response processing unit 127 is performed, the display control unit 121 may superimpose and display a notification (a dialog or the like) for prompting the participation user Up responding to an action from the user of the game device 100a to input a manipulation on the image of the virtual space in accordance with an instruction from the response processing unit 127. In addition, when a response (for example, participation in a party) to the action is automatically performed regardless of the manipulation input by the participation user Up, the display control unit 121 displays the image of the virtual space changed according to the response.

The captured image acquisition unit 123 acquires a captured image generated by an imaging device 1071 included in the input unit 107 of the game device 100b. In another embodiment, the captured image acquisition unit 123 may acquire a captured image transmitted through wired or wireless communication from an imaging device externally connected to the game device 100b. Also, the captured image may include a single frame (still image) or may include a series of frames (moving image). The captured image can include a screen of an external device (the game device 100a) displaying the image of the virtual space in which the user (the host user Uh) different from the participation user Up acts. As described above, the game device 100a controls modulation of light for displaying the image of the virtual space in accordance with a function of the light modulation control unit 117. The captured image acquisition unit 123 captures the light modulated in this way by acquiring a captured image including a screen.

The action information extraction unit 125 extracts the action information from the modulation of the light in a part of the screen of the game device 100a in the captured image acquired by the captured image acquisition unit 123. As described above, an action indicated by the action information can be an action from the host user Uh to the participation user Up. The action information extraction unit 125 separates an additional modulation component given by the light modulation control unit 117 in the game device 100a from a spatial and/or temporal change in the light captured as the captured image. The additional modulation component indicates action information generated by the action information generation unit 115 in the game device 100a.

The response processing unit 127 performs a process in which the user of the game device 100b, that is, the participation user Up, responds to an action of the host user Uh based on the action information extracted by the action information extraction unit 125. The response processing unit 127 outputs, for example, a notification for prompting a manipulation input of responding to an action. The notification may be output as an image by the display device 1051 via the display control unit 121. In addition, the notification may be output by audio, vibration, or a combination of audio or vibration and an image. Alternatively, when permission of the participation user Up can be gained preliminarily, the response processing unit 127 may automatically perform a process for a response to an action. More specifically, for example, the response processing unit 127 may automatically perform a process of automatically activating the client program of the network game, transmitting a login command to the server 300, or transmitting a command for participating in a party in the virtual space to the server 300.

(1-2. Examples of modulation scheme)

(First example)

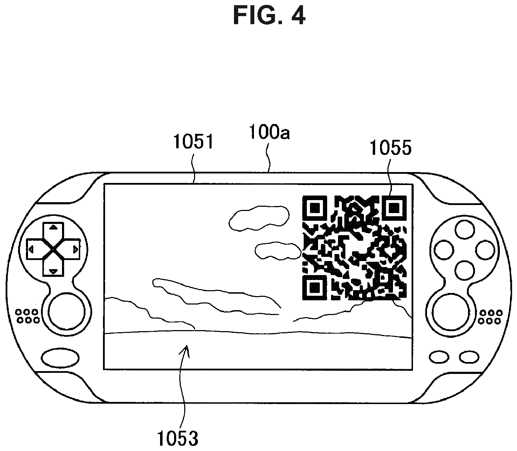

FIG. 4 is a diagram for describing a first example of a modulation scheme according to the first embodiment of the present disclosure. FIG. 4 illustrates an image 1053 of the virtual space of the network game displayed on the display device 1051 of the game device 100a and a 2-dimensional code 1055 displayed to be superimposed on a part of the image 1053 of the virtual space. In the first example, as illustrated, the 2-dimensional code 1055 generated by encoding the action information is displayed superimposed on the part of the image 1053 of the virtual space.

In the first example, the light modulation control unit 117 of the game device 100a spatially modulates light for displaying an image of the virtual space according to the action information. Here, the light modulation control unit 117 may transparently superimpose the 2-dimensional code 1055 on the image 1053 of the virtual space or may overwrite the 2-dimensional code 1055 on the image 1053. On the other hand, the captured image acquisition unit 123 of the game device 100b acquires a captured image including the 2-dimensional code 1055 displayed on a screen of the game device 100a. The action information extraction unit 125 extracts the action information by decoding the 2-dimensional code 1055 cut from an image.

In the modulation scheme according to the foregoing first example, a part of the image 1053 of the virtual space displayed on the display device 100a is hidden. However, since the action information (the 2-dimensional code 1055) included in an image can be visually recognized by the user, for example, it is easy to understand the timing at which the user of the game device 100b performs imaging. In addition, to extract the action information, a captured image of at least one frame in which there may be the entire 2-dimensional code 1055 is sufficient. Also, any format of the 2-dimensional code 1055 may be used. In addition, instead of the 2-dimensional code 1055, a 1-dimensional code may be displayed at an end of a screen.

(Second example)

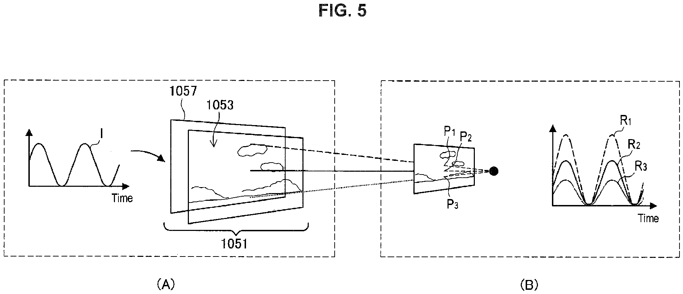

FIG. 5 is a diagram for describing a second example of the modulation scheme according to the first embodiment of the present disclosure. FIG. 5 illustrates (A) temporal modulation of luminance I of a backlight 1057 included in the display device 1051 when the image 1053 of the virtual space is displayed on the display device 1051 of the game device 100a and (B) a temporal change in luminance $R_1$ to luminance $R_3$ of points $P_1$ to $P_3$ in the image 1053 observed on the side of the game device 100b.

In the second example, the light modulation control unit 117 of the game device 100a temporally modulates light for displaying an image of the virtual space according to the action information. More specifically, the light modulation control unit 117 controls a control signal used for the display control unit 111 to drive the display device 1051 so that the luminance I of the backlight 1057 is temporally modulated according to the action information. Alternatively, the light modulation control unit 117 may change a luminance value of the image data input to the display control unit 111 so that the same temporal modulation is realized. On the other hand, the action information extraction unit 125 of the game device 100b extracts the action information by detecting a modulated signal from a temporal change in luminance R of the image 1053 of the virtual space included in the captured image and demodulating the modulated signal.

In the modulation scheme according to the foregoing second example, the image 1053 of the virtual space displayed on the display device 100a is not hidden. In addition, the modulation of the light by the light modulation control unit 117 exemplified as a temporal change in the luminance I can be performed at a faster modulation speed than a response speed of the eyes of the user. Therefore, as a result obtained by integrating and equalizing modulation components, the image 1053 of the virtual space visually recognized by the user is not substantially changed, compared to a case in which the modulation is not performed by the light modulation control unit 117. Accordingly, in this example, an influence on game play by the host user Uh using the game device 100a is further smaller than in the first example. In this example, however, since it is difficult to transmit the action information included in the image to the participation user Up, for example, the timing at which the participation user Up performs imaging using the game device 100b may be instructed from the host user Uh to the participation user Up.

Also, in the foregoing second example, the action information is expressed through the temporal modulation of the luminance of the image 1053. In another example, however, for example, the action information may be expressed through temporal modulation of the chromaticity of the image 1053. More specifically, when the backlight 1057 is configured to include light-emitting LEDs for multiple colors, the modulation of light corresponding to the action information may be realized in such a manner that the light modulation control unit 117 temporally changes the balance of the light emission intensity of the LEDs of the respective colors. Alternatively, the light modulation control unit 117 may change chromaticity values of the image data input to the display control unit 111 so that the same temporal change amount is realized.

(Third example)

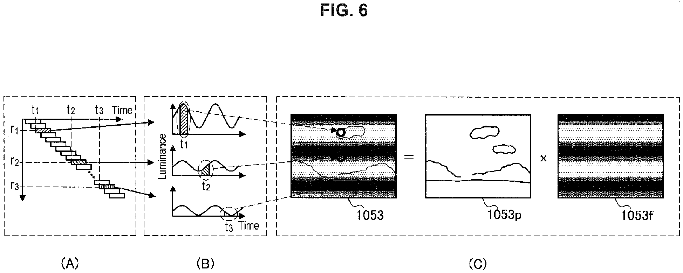

FIG. 6 is a diagram for describing a third example of the modulation scheme according to the first embodiment of the present disclosure. FIG. 6 illustrates (A) the shutter timing of each row when the imaging device 1071 of the game device 100b is realized by an image sensor in which a rolling shutter scheme for a CMOS or like is adopted, (B) a spatial change in a luminance value of each row occurring due to a difference in the shutter timing of each row, and (C) a relation between an original image and an image observed including the spatial change in the luminance value. In this example, the action information extraction unit 125 specifies temporal modulation given to light for displaying an image of the virtual space from a difference in the luminance or the chromaticity of light at a plurality of positions at which the exposure timing is different in a captured image.

More specifically, as illustrated in (A), the exposure timing of each row is slightly different in the image sensor in which the rolling shutter scheme is adopted. As a result, as illustrated in (B), a phase of a luminance value of an image including modulation components differs at an exposure time (time $t_1$) of a row $r_1$, an exposure time (time $t_2$) of a row $r_2$, and an exposure time (time $t_3$) of a row $r_3$ extracted as examples. As a result, as illustrated in (C), a spatial change in luminance appears in the image 1053 of the virtual space included in the captured image. The image 1053 including such a change in luminance (flicker) can be said to be an image in which a modulation component 1053f of light applied by the light modulation control unit 117 is superimposed on an original image 1053p of the virtual space (including no modulation component).

Accordingly, when the original image 1053p from which the flicker is removed in accordance with any method (for example, images of a plurality of frames are superimposed) can be obtained, the modulation component 1053f can be extracted from a difference between the original image 1053p and the image 1053 included in a certain frame of the captured image. The modulation component 1053f can be converted into a temporal change in luminance based on, for example, a shutter speed of an image sensor that realizes the imaging device 1071. Alternatively, the modulation component 1053f may be treated as a spatial modulation component without change.

(Fourth example)

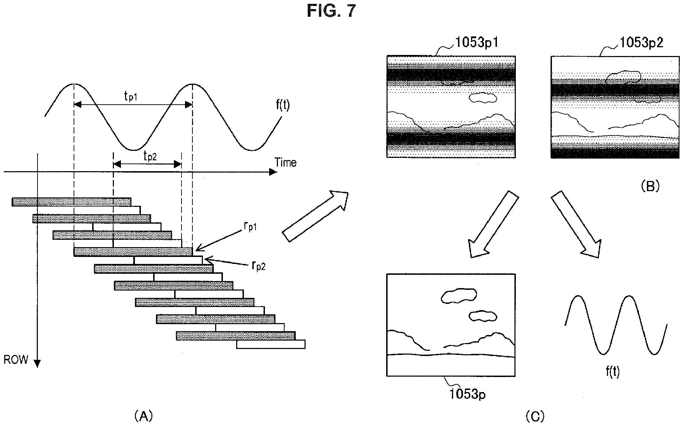

FIG. 7 is a diagram for describing a fourth example of the modulation scheme according to the first embodiment of the present disclosure. FIG. 7 illustrates (A) an exposure time of each row when the imaging device 1071 of the game device 100b is realized by an image sensor in which the rolling shutter scheme for a CMOS or the like is adopted, (B) two captured images of the same frame obtained using the imaging device 1071, (C) a relation between the two captured images and luminance changes. Even in this example, the action information extraction unit 125 specifies temporal modulation given to light for displaying an image of the virtual space from a difference in the luminance or the chromaticity of light at a plurality of positions at which the exposure timing is different in a captured image, but the specific procedure is different from that of the third example.

More specifically, as illustrated in (A), in the image sensor that realizes the imaging device 1071 in the fourth example, the length of an exposure time differs for each row or each pixel in addition to the adoption of the rolling shutter scheme. In the illustrated example, rows $r_{p1}$ exposed for a first exposure time $t_{p1}$ and rows $r_{p2}$ exposed for a second exposure time $t_{p2}$ shorter than the first exposure time $t_{p1}$ are alternately arrayed over the entire region of the image sensor. In this example, as illustrated in (B), the captured image acquisition unit 123 separately acquires an image 1053p1 formed from pixels of the row $r_{p1}$ and an image 1053p2 formed from pixels of the row $r_{p2}$. Since the length of the exposure time differs between the images 1053p1 and 1053p2, an integrated section of temporally modulated luminance values and a luminance change indicated in the array direction of the rows accordingly differs.

Here, when $i_{bg}(y)$ is the luminance of the original image 1053p, $i_1(y)$ and $i_2(y)$ are the luminance of the image 1053p1 and the luminance of the image 1053p2, $s_1(t)$ and $s_2(t)$ are shutter functions (known), and $f(t)$ is a temporal modulation component of the luminance generated by the light modulation control unit 117, relations expressed in the following Equations 1 and 2 are established.
[Math. 1]

$$i_1(y) = (s_1(t) * f(t)) \cdot i_{bg}(y) \quad \cdots \quad \text{(Equation 1)}$$

$$i_2(y) = (s_2(t) * f(t)) \cdot i_{bg}(y) \quad \cdots \quad \text{(Equation 2)}$$

Further, for example, when the first exposure time $t_{p1}$ is an integer multiple of a period of the modulation component $f(t)$ generated by the light modulation control unit 117, the modulation component $f(t)$ is offset by integration in the image 1053p1. Accordingly, the following Equation 3 is established for the luminance $i_1(y)$ of the image 1053p1 (where k is any integer). Further, when Equation 3 is substituted into the foregoing Equation 2, Equation 4 is established.
[Math. 2]

$$i_1(y) = k \cdot i_{bg}(y) \quad \cdots \quad \text{(Equation 3)}$$

$$i_2(y) = (s_2(t) * f(t)) \cdot \frac{i_1(y)}{k} \quad \cdot \cdot \cdot \text{(Equation 4)}$$

Since the shutter function $s_2(t)$ and k are known, the modulation component f(t) can be obtained by substituting $i_1(y)$ and $i_2(y)$ into the foregoing Equation 4. That is, in this example, by setting the first exposure time $t_{p1}$ to an integer multiple of the period of the modulation component f(t) generated by the light modulation control unit 117, it is possible to extract the modulation component f(t) indicating the action information from a captured image of one frame. More specifically, in Equation 4, the modulation component f(t) is calculated as a difference between the luminance $i_1(y)$ of the image 1053p1 not including the temporal change in the luminance and the luminance $i_2(y)$ of the image 1053p2 including the temporal change in the luminance.

(1-3. Example of process sequence)

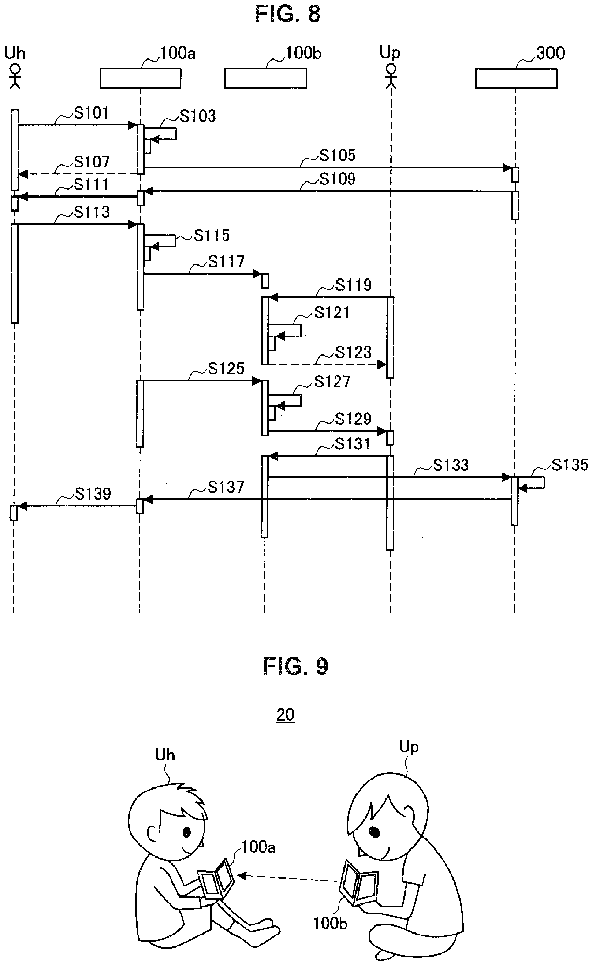

FIG. 8 is a diagram for describing an example of a process sequence according to the first embodiment of the present disclosure. FIG. 8 illustrates the example of the process sequence among the host user Uh, the game device 100a, the game device 100b, the participation user Up, and the server 300.

Referring to FIG. 8, the game program is first activated using the game device 100a in accordance with a manipulation of the host user Uh (S101 and S103). At this time, the game device 100a transmits the identification information regarding the host user Uh to the server 300 (S105) and starts displaying a game screen (S107). Thereafter, the server 300 updates information regarding the virtual space in the game based on manipulation information (not illustrated) regarding the host user Uh transmitted from the game device 100a and transmits the information to the game device 100a (S109), and then the game device 100a displays an image of the updated virtual space (S111).

At a certain time point, the host user Uh performs a manipulation of inviting the party members to participate on the game device 100a to invite the party members to participate in the virtual space of the game (S113). Alternatively, the invitation to the party members may be set to be automatically started after the game program is activated in S103. At this time, the game device 100a generates the action information in accordance with the function of the action information generation unit 115 (S115) and transfers the action information to the game device 100b through the above-described visible light communication (S117).

At this time, the game program may not be activated in the game device 100b, and nothing happens when the imaging device 1071 is not activated. In the illustrated example, the participation user Up to which an intention of inviting to the party orally from the host user Uh is transmitted performs a manipulation of activating the imaging device 1071 (a camera function) on the game device 100b (S119), the game device 100b activates the camera function (S121), and a preview image (live view image) is displayed (S123).

Here, when a screen of the game device 100a is included in a captured image acquired by the imaging device 1071 of the game device 100b, the action information transferred in the foregoing S117 from the side of the game device 100a through the visible light communication is received by the game device 100b (S125). In the game device 100b, the action information extraction unit 125 extracts the action information from the captured image and the response processing unit 127 performs a process for the party participation. More specifically, the response processing unit 127 activates the game program in the game device 100b (S127; when the game program is not yet activated) and displays a dialog for confirming whether the participation user will participate in the party on the screen (S129). When a manipulation input indicating that the participation is accepted is given from the participation user Up (S131), the game device 100a transmits the identification information regarding the participation user Up and the identification information regarding the host user Uh and the party extracted from the action information to the server 300 (S133).

The server 300 performs a process of allowing the participation user Up to participate in the party of the host user Uh in the virtual space of the game based on information received from the game device 100b (S135). When the process is completed, the server 300 transmits a notification indicating that the participation user Up is participating in the party to the game device 100a (S137) and the game device 100a outputs the notification to the host user Uh (S139). Also, the game play of the host user Uh in the game device 100a is not interrupted before the host user Uh performs the manipulation for inviting the party member in the foregoing S113 and then the participation of the participation user Up in the party in S137 is completed. Thereafter, the host user Uh and the participation user Up can belong to the same party and respectively play the game in the virtual space of the game provided by the server 300 using the game devices 100a and 100b.

(2. Second embodiment)

(2-1. System configuration)

FIG. 9 is a diagram illustrating a schematic configuration of a system according to a second embodiment of the present disclosure. Referring to FIG. 9, a system 20 includes the game device 100a of the host user Uh and the game device 100b of the participation user Up. The game devices 100a and 100b can be realized by a hardware configuration of an information processing device to be described below. The game devices 100a and 100b are connected to each other through ad-hoc communication such as Bluetooth (registered trademark) or network communication such as the Internet.

The embodiment is different from the foregoing first embodiment in that a server is not included in the system 20. In the system 20, each of the game devices 100a and 100b can individually provide a virtual space of the game. Further, the game devices 100a and 100b can link mutual virtual spaces of games. That is, the host user Uh or the participation user Up can form the party and play the network game using the game devices 100a and 100b, as in the first embodiment.

In the embodiment, a procedure of visible light communication between the game devices 100a and 100b is the same as that in the first embodiment. That is, the game device 100a modulates light for displaying an image on a screen according to action information indicating an action (an invitation to a party) from the host user Uh to the participation user Up. A camera installed on the rear surface of the game device 100b acquires a captured image including a screen of the game device 100a. The game device 100b can extract the action information from the modulation of the light of a screen portion of the game device 100a included in the captured image.

Based on the extracted action information, for example, the game device 100b performs a process in which the participation user Up forms a party with the host user Uh and plays a game. More specifically, the game device 100b activates a program of the game when the participation user Up does not yet play the game. When the program of the game is not installed in the game device 100b, the game device 100b may request the game device 100a to transmit the program. Further, the game device 100b transmits a command for forming a party in the virtual space of the game and playing the game to the game device 100a. Even in the embodiment, in accordance with the foregoing procedure, the host user Uh or the participation user Up can form the party speedily and start playing the game, as in the first embodiment.

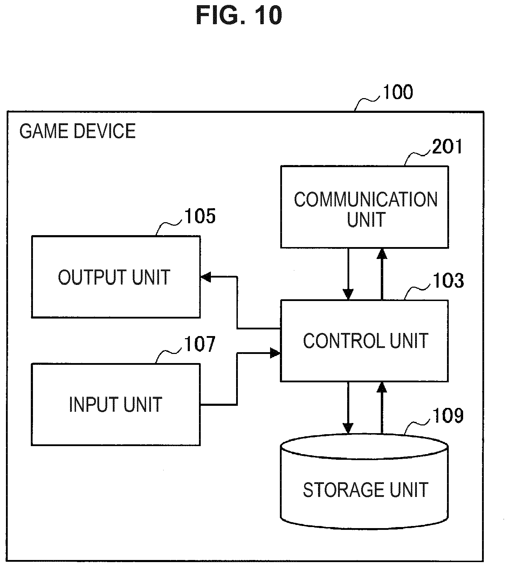

FIG. 10 is a block diagram illustrating a functional configuration of the game device according to the second embodiment of the present disclosure. Referring to FIG. 10, the game device 100 includes a communication unit 201, a control unit 103, an output unit 105, an input unit 107, and a storage unit 109. The communication unit 201 includes various communication devices that perform ad-hoc communication (or network communication) between the game devices 100. Since the control unit 103, the output unit 105, the input unit 107, and the storage unit 109 are the same constituent elements as those of the first embodiment, the repeated description thereof will be omitted.

As described above, in the embodiment, the game device 100 can individually perform a process in which each user plays the game. When a plurality of users each form a party and play a game using the game devices 100, the game devices 100 mutually exchange information indicating manipulation inputs by the users, a state of the virtual space, or the like. Alternatively, any of the game devices 100 may function as a host. In this case, the other game devices 100 transmit information indicating manipulation inputs, user states, or the like to the game device 100 serving as the host and receive information indicating an updated state of the virtual space from the game device 100 serving as the host.

Also, since a functional configuration related to a procedure for realizing the action between users described above with reference to FIG. 3 and an example of the modulation scheme described above with reference to FIGS. 4 to 7 are the same as those of the embodiment, the repeated description about these items will be omitted.

(2-2. Example of process sequence)

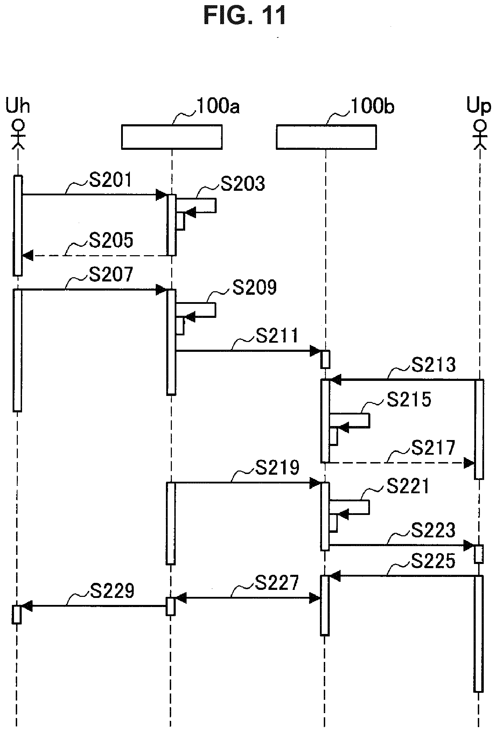

FIG. 11 is a diagram for describing an example of a process sequence according to the second embodiment of the present disclosure. FIG. 11 illustrates an example of a process sequence among the host user Uh, the game device 100a, the game device 100b, and the participation user Up.

Referring to FIG. 11, the game program is first activated using the game device 100a in accordance with a manipulation of the host user Uh (S201 and S203). The game device 100a displays an image of the virtual space of the game (S205). At a certain time point, the host user Uh invites the party members to participate in the virtual space of the game and performs a manipulation on the game device 100a to suggest that the party members participate (S207). Alternatively, the invitation to the party members may be set to be automatically started after the game program is activated in S203. At this time, the game device 100a generates the action information in accordance with the function of the action information generation unit 115 (S209) and the action information is transferred to the game device 100b through the same visible light communication as that described in the first embodiment (S211).

At this time, the game program may not be activated in the game device 100b, and nothing happens when the imaging device 1071 is not activated. In the illustrated example, the participation user Up to which an intention of inviting to the party orally from the host user Uh is transmitted performs a manipulation of activating the imaging device 1071 (a camera function) on the game device 100b (S213), the game device 100b activates the camera function (S215), and a preview image (live view image) is displayed (S217).

Here, when a screen of the game device 100a is included in a captured image acquired by the imaging device 1071 of the game device 100b, the action information transferred in the foregoing S211 from the side of the game device 100a through the visible light communication is received by the game device 100b (S219). In the game device 100b, the action information extraction unit 125 extracts the action information from the captured image and the response processing unit 127 performs a process for the party participation. More specifically, the response processing unit 127 activates the game program in the game device 100b (S221; when the game program is not yet activated) and displays a dialog for confirming whether the participation user will participate in the party on the screen (S223). When a manipulation input indicating that the participation is accepted is given from the participation user Up (S225), the game device 100b performs a process of allowing the participation user Up to participate in the party of the host user Uh with the game device 100a (S227). When the process is completed, the game device 100a outputs a notification indicating that the participation user Up is participating in the party to the host user Uh (S229). Thereafter, the host user Uh and the participation user Up can form the party and respectively play the game in the virtual space of the game using the game devices 100a and 100b.

As in the above-described second embodiment, in the embodiment of the present disclosure, the virtual space in which the user acts may not necessarily be provided by a server or may be provided in accordance with a process via communication between clients such as the game devices. In this case, for example, the clients mutually recognize each other via a communication protocol such as Bluetooth (registered trademark). However, since the devices of other parties recognized in accordance with the communication protocol may not necessarily automatically correspond to the users of the other parties which are action targets in the virtual space of the game (for example, communication can be performed with the plurality of devices using Bluetooth (registered trademark)), the transfer of the action information through the visible light communication can be useful in the embodiment of the present disclosure.

(3. Third embodiment)

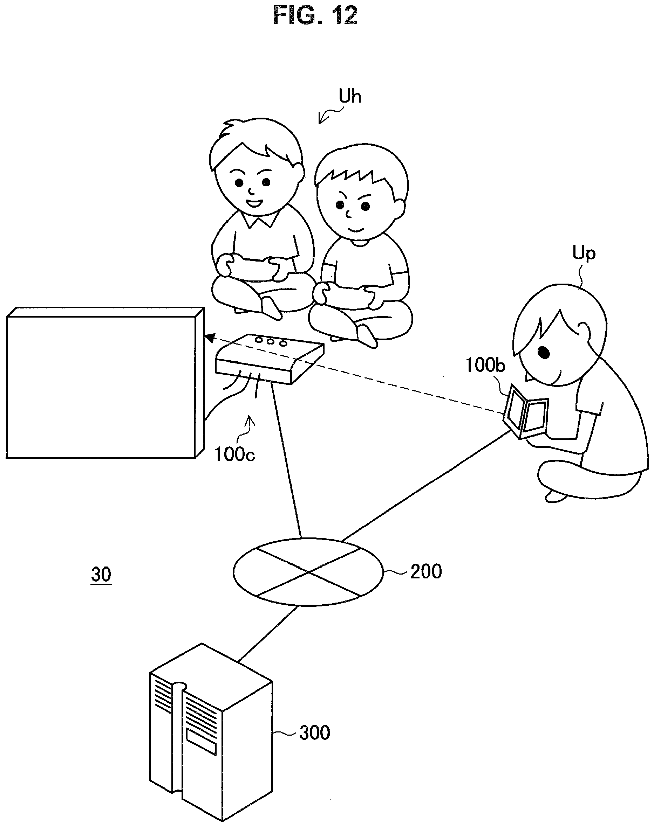

FIG. 12 is a diagram illustrating a schematic configuration of a system according to a third embodiment of the present disclosure. Referring to FIG. 12, a system 30 includes the game device 100c of the host user Uh, the game device 100b of the participation user Up, and the server 300. The game devices 100b and 100c can be realized by a hardware configuration of an information processing device to be described below. In addition, the server 300 can include one server device or a plurality of server devices realized by a hardware configuration of the information processing device to be described below. The game device 100b, the game device 100c, and the server 300 are connected to each other by a network 200 such as the Internet. Alternatively, the system 30 may not include the server 300, and the game devices 100b and 100c may be connected to each other through ad-hoc communication or the like, as in the above-described second embodiment.

In the embodiment, the host user Uh (who may be a plurality of users) uses a stationary game device 100c and the participation user Up uses the portable game device 100b. The game device 100b is able to photograph a screen of the game device 100c using a camera (imaging device) installed on the rear surface, but the game device 100c may not be able to photograph a screen of the game device 100b. Accordingly, in the embodiment, the roles of the game devices 100c and 100b are not compatible. That is, in the embodiment, a user using the game device 100c is the host user Uh and a user using the game device 100b is the participation user Up. Also, the functional configuration of the game device 100c is the same as that of the game device 100a described in the first embodiment except that the roles are not compatible.

In an embodiment of the present disclosure, as in the third embodiment, functions of the information processing devices used by the users may not be compatible. That is, a system according to an embodiment of the present disclosure may include at least one information processing device that has a function of controlling modulation of light for displaying an image of a virtual space according to action information and at least one information processing device that extracts the action information form a captured image including the image displayed in this way, and the roles of the devices may not necessarily be compatible or the devices may not necessarily be the same type of device.

(4. Fourth embodiment)

(4-1. System configuration)

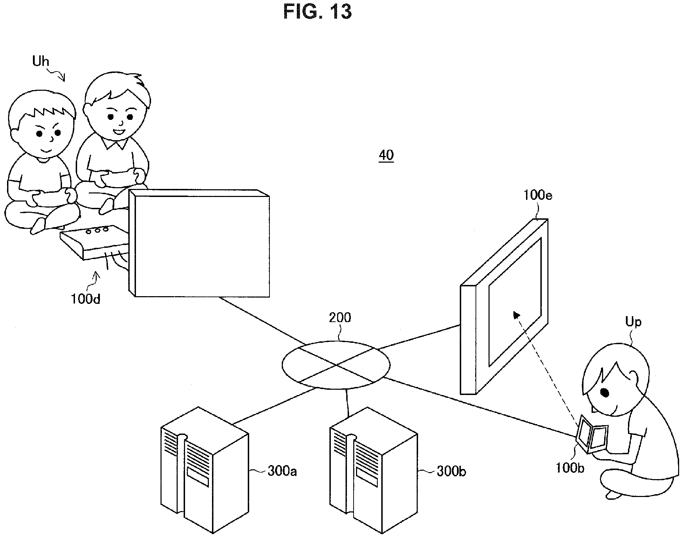

FIG. 13 is a diagram illustrating a schematic configuration of a system according to a fourth embodiment of the present disclosure. Referring to FIG. 13, a system 40 includes a game device 100d of a host user Uh, a monitor 100e which is viewed by a participation user Up, a game device 100b of the participation user Up, a moving image delivery server 300a, and a game server 300b. The game device 100b, the game device 100d, and the monitor 100e can be realized by a hardware configuration of an information processing device to be described below. In addition, each of the moving image delivery server 300a and the game server 300b can include one server device or a plurality of server devices realized by a hardware configuration of the information processing device to be described below. The game device 100b, the game device 100d, the monitor 100e, the moving image delivery server 300a, and the game server 300b are connected to each other by a network 200 such as the Internet.

Unlike the foregoing embodiments, in the embodiment, the host user Uh and the participation user Up are not necessarily close to each other. For example, the host user Uh plays a network game using the game device 100d and uploads a game screen during play to the moving image delivery server 300a. The moving image delivery server 300a delivers the uploaded game screen as a moving image to the monitor 100e viewed by the participation user Uh. The participation user Up can photograph a screen of the monitor 100e on which a moving image is displayed using camera (an imaging device) installed on the rear surface of the game device 100b.

In recent years, with an advance in technologies for so-called live streaming, a user can deliver a game screen during play to another user in real time. In the embodiment, the host user Uh delivers the game screen during the play as a moving image to the participation user Up using such a technology. The participation user Up views a moving image of the delivered game screen on a monitor 100e such as a personal computer (PC) or a television. In the embodiment, at this time, when the participation user Up photographs a screen of the monitor 100e using the camera of the game device 100b, action information is transferred through visible light communication. As a result, for example, the participation user Up can start playing a network game played by the host user Uh and further participate in the party of the host user Uh.

(4-2. Example of process sequence)

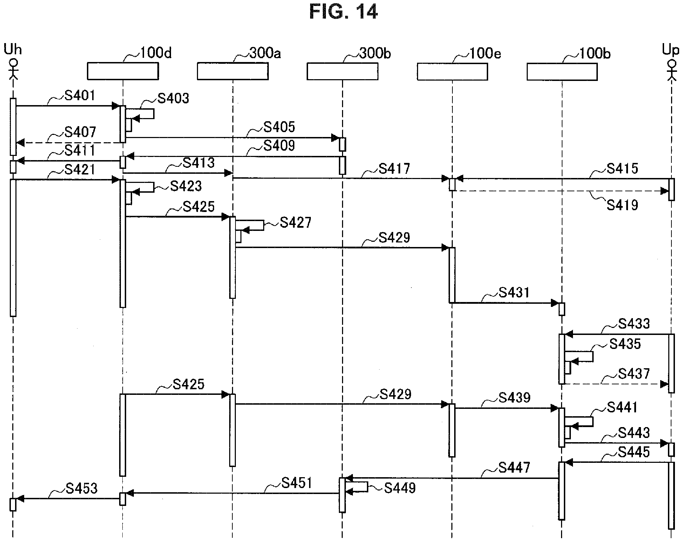

FIG. 14 is a diagram for describing an example of a process sequence according to the fourth embodiment of the present disclosure. FIG. 14 illustrates an example of a process sequence among the host user Uh, the game device 100d, the moving image delivery server 300a, the game server 300b, the monitor 100e, the game device 100b, and the participation user Up.

Referring to FIG. 14, the game program is first activated using the game device 100d in accordance with a manipulation of the host user Uh (S401 and S403). At this time, the game device 100d transmits the identification information regarding the host user Uh to the game server 300b (S405) and starts displaying a game screen (S407). Thereafter, the game server 300b updates information regarding the virtual space in the game based on manipulation information (not illustrated) regarding the host user Uh transmitted from the game device 100d and transmits the information to the game device 100d (S409) and the game device 100d displays an image of the updated virtual space (S411). Concurrently with this, the game device 100d uploads the image of the virtual space to the moving image delivery server 300a (S413). When a moving image reproduction program is activated in the monitor 100e (S415), the participation user Up starts viewing (S419) an image delivered (S417) from the moving image delivery server 300a.

At a certain time point, the host user Uh performs a manipulation of recruiting the party members on the game device 100d to recruit the party members in the virtual space of the game (S421). Alternatively, the recruitment of the party members may be set to be automatically started after the upload of the moving image is started in S413. At this time, the game device 100d generates the action information (S423) and transfers the generated action information to the moving image delivery server 300a (S425). The moving image delivery server 300a changes data of the delivered image according to the action information (S427) and delivers the changed data to the monitor 100e (S429). More specifically, for example, the moving image delivery server 300a temporally modulates a luminance value of the entire delivered image according to the action information. Alternatively, the moving image delivery server 300a may superimpose a 2-dimensional code on a part of the delivered image. An example of the modulation scheme can be same as that described in the foregoing first embodiment.

In the embodiment, the action information generated using the game device 100d of the host user Uh is transferred from the monitor 100e to the game device 100b of the participation user Up through visible light communication (S431). At this time, the game program may not be activated in the game device 100b, and nothing happens when the imaging device 1071 is not activated. In the illustrated example, the participation user Up viewing the delivered moving image performs a manipulation of activating the imaging device 1071 (a camera function) on the game device 100b (S433), the game device 100b activates the camera function (S435), and a preview image (live view image) is displayed (S437). At this time, a message for calling for participation in a party may be sent as an image (a chat log or the like) or audio from the host user Uh to unspecified users (potential participation users Up) viewing the moving image. Alternatively, the participation user Up may also consider to participate in the party voluntarily.

When the screen of the monitor 100e is included in a captured image acquired by the imaging device 1071 of the game device 100b, the action information delivered in the foregoing S425 and S429 (repeatedly performed in the illustrated example) and transferred from the side of the monitor 100e through the visible light communication is received by the game device 100b (S439). In the game device 100b, the action information extraction unit 125 extracts the action information from the captured image and the response processing unit 127 performs a process for the party participation. More specifically, the response processing unit 127 activates the game program in the game device 100b (S441; when the game program is not yet activated) and displays a dialog for confirming whether the participation user will participate in the party on the screen (S443). When a manipulation input indicating that the participation is accepted is given from the participation user Up (S445), the game device 100a transmits the identification information regarding the participation user Up and the identification information regarding the host user Uh and the party extracted from the action information to the game server 300b (S447).

The game server 300b performs a process of allowing the participation user Up to participate in the party of the host user Uh in the virtual space of the game based on information received from the game device 100b (S449). When the process is completed, the game server 300b transmits a notification indicating that the participation user Up is participating in the party to the game device 100d (S451) and the game device 100d outputs the notification to the host user Uh (S453). Also, the game play of the host user Uh in the game device 100d is not interrupted before the host user Uh performs the manipulation for recruitment of the party member in the foregoing S421 and then the participation of the participation user Up in the party in S453 is completed. Thereafter, the host user Uh and the participation user Up can belong to the same party and respectively play the game in the virtual space of the game provided by the game server 300b using the game devices 100d and 100b.

Also, the participation user Up may end the viewing of the moving image delivered from the moving image delivery server 300a according to the start of playing the game. On the other hand, for other users, the upload of the moving image from the game device 100d to the moving image delivery server 300a and the delivery of the moving image from the moving image delivery server 300a to the client device can be continued.

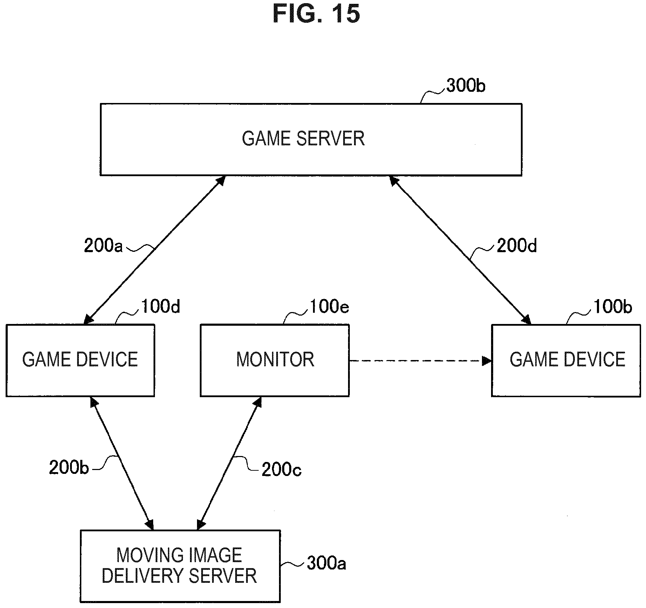

FIG. 15 is a diagram exemplifying a relation between the devices according to the fourth embodiment of the present invention. Referring to FIG. 15, the game device 100d used by the host user Uh communicates with the game server 300b via a communication means 200a and exchanges information regarding network game play. In addition, the game device 100d also communicates with the moving image delivery server 300a via a communication means 200b and uploads the game screen during network game play. For example, the communication means 200a and the communication means 200b may have a common configuration such as the Internet or the like or may have mutually different configurations.

Here, the game device 100d has a function of uploading the game screen to the moving image delivery server 300a and has the same configuration as the game device 100a described in the first embodiment and the game device 100c described in the third embodiment except that modulation of light for transferring the action information is not directly performed, as will be described below. Also, since a functional configuration for uploading an image is already known well, the detailed description thereof will be omitted. The fact that modulation of light for transferring the action information is not directly performed will be described below.

On the other hand, the monitor 100e used for the participation user Up to view a moving image communicates with the moving image delivery server 300a via a communication means 200c and receives a moving image delivered from the game device 100d via the moving image delivery server 300a. Here, the monitor 100e can be a PC, a television, or the like, as described above. The monitor 100e transfers an image modulated according to the action information to the game device 100b through the visible light communication, but the monitor 100e may not necessarily have a function of modulating light. That is, in the embodiment, the monitor 100e can has a configuration in which a delivered image is simply output. Since the configuration of such a monitor is already known well, the detailed description thereof will not be omitted.

Subsequently, referring to FIG. 15, the game device 100b used by the participation user Up communicates with the game server 300b via a communication means 200d and exchanges information regarding network game play. The game device 100b can have the same configuration as the game device 100b described in the foregoing first embodiment. In the embodiment, a screen included in a captured image by the imaging device 1071 is not a screen of the other game device 100a but a screen of the monitor 100e, and is the same in that the screen is a screen of an external device displaying the image of the virtual space. For example, the game device 100b may correspond to a case in which a screen included in a captured image is a screen of any of various devices.

In the fourth embodiment of the present disclosure described above, for example, the functional configuration related to the procedure for realizing an action between the users, as described in the foregoing first embodiment, is implemented as follows, for example.

(Host user side)

In the embodiment, the game device 100d used by the host user Uh and the monitor 100e displaying a delivered image uploaded from the host user Uh via the moving image delivery server 300a display the image of the virtual space in which the host user Uh acts on the screen . Accordingly, the foregoing display control unit 111 is realized in the game device 100d, the moving image delivery server 300a, and/or the monitor 100e. Also, the display control unit 111 realized in the moving image delivery server 300a and/or the monitor 100e is controlled in a multiple manner by the light modulation control unit 117 to be described below.

The manipulation input acquisition unit 113 acquiring a manipulation input of the host user Uh is realized in the game device 100d.

Based on the manipulation input of the host user Uh, the action information generation unit 115 generating the action information indicating an action from the host user Uh to the participation user Up in the virtual space is realized in, for example, the game device 100d. Alternatively, information indicating a manipulation input may be transferred to the moving image delivery server 300a instead of the action information and the action information generation unit 115 may be realized in the moving image delivery server 300a.

As described above, in the embodiment, the light modulation control unit 117 that controls the modulation of the light for displaying the image of the virtual space according to the action information is realized in, for example, the game device 100d. In this case, the light modulation control unit 117 realizes the control of the modulation of the light according to the action information by changing image data uploaded from the game device 100d to the moving image delivery server 300a. Here, the image data uploaded is image data transmitted to an external device displaying the image of the virtual space in which the host user Uh acts toward the participation user Up, that is, the monitor 100e.

Alternatively, the light modulation control unit 117 may be realized in the moving image delivery server 300a. In this case, the moving image delivery server 300a receives the action information along with the image uploaded from the game device 100d and changes the image data delivered to the monitor 100e according to the action information. In addition, the light modulation control unit 117 may be realized in the monitor 100e. In the illustrated example, it has been described that the monitor 100e is used as a general monitor. In another example, the monitor 100e may be a portable terminal that has an information processing function such as a PC or the like and may have a function of applying temporal or spatial modulation on an image displayed according to the action information delivered along with an image from the moving image delivery server 300a.

(Participation user side)

As described above, the configuration of the game device 100b used by the participation user Up in the embodiment can be the same as the configuration of the game device 100b described in the first embodiment. Accordingly, the functional configuration related to the procedure for realizing the action between the users can also be realized as steps of a program that is executed by the control unit 103 of the game device 100b, as in the first embodiment. Also, in the embodiment, the external device of which the screen is included in a captured image acquired by the captured image acquisition unit 123 is the monitor 100e different from the game device 100d used by the host user Uh.

(5. Hardware Configuration)

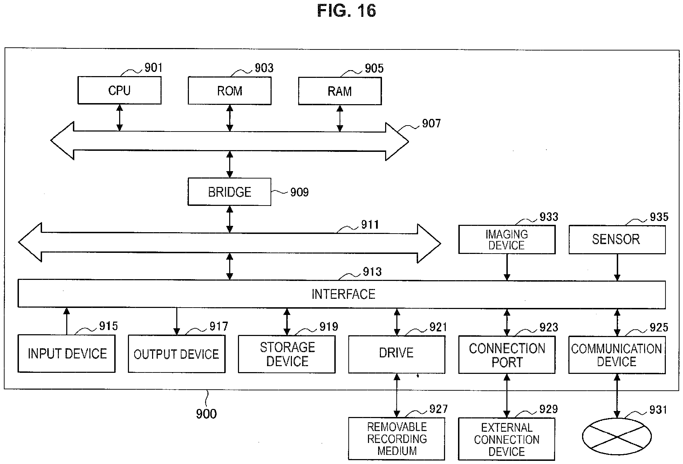

Next, with reference to FIG. 16, a hardware configuration of an information processing device according to an embodiment of the present disclosure is explained. FIG. 16 is a block diagram illustrating a hardware configuration example of an information processing device according to the embodiment of the present disclosure. An illustrated information processing device 900 may achieve the game machine, the server device, and/or the monitor according to the embodiments of the present disclosure, for example.

The information processing device 900 includes a central processing unit (CPU) 901, read only memory (ROM) 903, and random access memory (RAM) 905. In addition, the information processing device 900 may include a host bus 907, a bridge 909, an external bus 911, an interface 913, an input device 915, an output device 917, a storage device 919, a drive 921, a connection port 923, and a communication device 925. Moreover, the information processing device 900 may include an imaging device 933, and a sensor 935, as necessary. The information processing device 900 may include a processing circuit such as a digital signal processor (DSP), an application-specific integrated circuit (ASIC), or a field-programmable gate array (FPGA), alternatively or in addition to the CPU 901.

The CPU 901 serves as an arithmetic processing device and a control device, and controls the overall operation or a part of the operation of the information processing device 900 according to various programs recorded in the ROM 903, the RAM 905, the storage device 919, or a removable recording medium 927. The ROM 903 stores programs, operation parameters, and the like used by the CPU 901. The RAM 905 transiently stores programs used when the CPU 901 is executed, and various parameters that change as appropriate when executing such programs. The CPU 901, the ROM 903, and the RAM 905 are connected with each other via the host bus 907 configured from an internal bus such as a CPU bus or the like. The host bus 907 is connected to the external bus 911 such as a Peripheral Component Interconnect/Interface (PCI) bus via the bridge 909.

The input device 915 is a device operated by a user such as a mouse, a keyboard, a touch panel, a button, a switch, and a lever. The input device 915 may be a remote control device that uses, for example, infrared radiation and another type of radiowave. Alternatively, the input device 915 may be an external connection device 929 such as a mobile phone that corresponds to an operation of the information processing device 900. The input device 915 includes an input control circuit that generates input signals on the basis of information which is input by a user to output the generated input signals to the CPU 901. A user inputs various types of data to the information processing device 900 and instructs the information processing device 900 to perform a processing operation by operating the input device 915.

The output device 917 includes a device that can report acquired information to a user visually, audibly, or haptically. The output device 917 may be, for example, a display device such as a liquid crystal display (LCD) or an organic electro-luminescence (EL) display, an audio output device such as a speaker or a headphone, or a vibrator. The output device 917 outputs a result obtained through a process performed by the information processing device 900, in the form of video such as text and an image, sounds such as voice and audio sounds, or vibration.

The storage device 919 is a device for data storage that is an example of a storage unit of the information processing device 900. The storage device 919 includes, for example, a magnetic storage device such as a hard disk drive (HDD), a semiconductor storage device, an optical storage device, or a magneto-optical storage device. The storage device 919 stores therein the programs and various data executed by the CPU 901, various data acquired from an outside, and the like.

The drive 921 is a reader/writer for the removable recording medium 927 such as a magnetic disk, an optical disc, a magneto-optical disk, and a semiconductor memory, and built in or externally attached to the information processing device 900. The drive 921 reads out information recorded on the mounted removable recording medium 927, and outputs the information to the RAM 905. The drive 921 writes the record into the mounted removable recording medium 927.

The connection port 923 is a port used to connect devices to the information processing device 900. The connection port 923 may include a Universal Serial Bus (USB) port, an IEEE1394 port, and a Small Computer System Interface (SCSI) port. The connection port 923 may further include an RS-232C port, an optical audio terminal, a High-Definition Multimedia Interface (HDMI) (registered trademark) port, and so on. The connection of the external connection device 929 to the connection port 923 makes it possible to exchange various data between the information processing device 900 and the external connection device 929.

The communication device 925 is a communication interface including, for example, a communication device for connection to a communication network 931. The communication device 925 may be, for example, a communication card for a local area network (LAN), Bluetooth (registered trademark), Wi-Fi, or a wireless USB (WUSB). The communication device 925 may also be, for example, a router for optical communication, a router for asymmetric digital subscriber line (ADSL), or a modem for various types of communication. For example, the communication device 925 transmits and receives signals in the Internet or transits signals to and receives signals from another communication device by using a predetermined protocol such as TCP/IP. The communication network 931 to which the communication device 925 connects is a network established through wired or wireless connection. The communication network 931 may include, for example, the Internet, a home LAN, infrared communication, radio communication, or satellite communication.

The imaging device 933 is a device that captures an image of a real space by using an image sensor such as a charge coupled device (CCD) and a complementary metal oxide semiconductor (CMOS), and various members such as a lens for controlling image formation of a subject image onto the image sensor, and generates the captured image. The imaging device 933 may capture a still image or a moving image.

The sensor 935 is various sensors such as an acceleration sensor, an angular velocity sensor, a geomagnetic sensor, an illuminance sensor, a temperature sensor, a barometric sensor, and a sound sensor (microphone). The sensor 935 acquires information regarding a state of the information processing device 900 such as a posture of a housing of the information processing device 900, and information regarding an environment surrounding the information processing device 900 such as luminous intensity and noise around the information processing device 900. The sensor 935 may include a global positioning system (GPS) receiver that receives GPS signals to measure latitude, longitude, and altitude of the device.

The example of the hardware configuration of the information processing device 900 has been described. Each of the structural elements described above may be configured by using a general purpose component or may be configured by hardware specialized for the function of each of the structural elements. The configuration may be changed as necessary in accordance with the state of the art at the time of working of the present disclosure.

(6. Supplement)

The embodiments of the present disclosure may include, for example, the above-described information processing device (for example, the game machine, the server device, and/or the monitor), the above-described system, the information processing method executed by the information processing device or the system, a program for causing the information processing device to exhibits its function, and a non-transitory physical medium having the program stored therein.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, in the above-described embodiment, the case in which the action between the users in the virtual space is an invitation to a party in a game has been described, but an embodiment of the present disclosure is not limited to such an example. For example, an action such as interchanging an item or friend registration in a virtual space of a game is also the same as an invitation to a party in that a procedure for designating a user of the other party of an action, or a procedure of approval of both the users is necessary. Accordingly, for example, for such an action, an environment in which a procedure is simplified by applying an embodiment of the present disclosure so that a user can focus on an original activity in a virtual space is provided.

In addition, in the above-described embodiment, the case in which the user acts in the virtual space of the game has been described, but an embodiment of the present disclosure is not limited to such an example. For example, there is also a virtual space in which users do not necessarily play a game, such as a virtual space provided as social media. Even in such a virtual space, when the virtual space is open to an unspecified number of users, the advantage of simplifying the procedure of the action between the users described above can be obtained by applying an embodiment of the present disclosure.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.

(1) An information processing device including:

a display control unit configured to display an image of a virtual space in which a first user acts;
an action information generation unit configured to generate action information indicating an action from the first user to a second user in the virtual space; and
a light modulation control unit configured to control modulation of light for displaying the image of the virtual space according to the action information.

(2) The information processing device according to (1),
wherein the light modulation control unit temporally modulates the light for displaying the image according to the action information.
(3) The information processing device according to (2),
wherein the light modulation control unit temporally modulates luminance or chromaticity of the light for displaying the image according to the action information.
(4) The information processing device according to (1),
wherein the light modulation control unit spatially modulates the light for displaying the image according to the action information.
(5) The information processing device according to (4),
wherein the light modulation control unit superimposes and displays a code generated by encoding the action information on a part of the image.
(6) The information processing device according to any one of (1) to (5),
wherein the light modulation control unit realizes the control of the modulation of the light according to the action information by changing image data to be input to the display control unit.
(7) The information processing device according to any one of (1) to (5),
wherein the light modulation control unit realizes the control of the modulation of the light according to the action information by changing a control signal of a display device to be output from the display control unit.
(8) The information processing device according to any one of (1) to (5),
wherein the light modulation control unit realizes the control of the modulation of the light according to the action information by changing image data to be transmitted to an external device displaying the image toward the second user.
(9) An information processing device including:

a captured image acquisition unit configured to acquire a captured image including a screen of an external device displaying a first image of a virtual space in which a first user acts;

an action information extraction unit configured to extract action information indicating an action from the first user to a second user in the virtual space, from modulation of light of the captured image in a part of the screen; a response processing unit configured to perform a process in which the second user responds to the action; and a display control unit configured to display a second image of the virtual space in which the second user acts according to a result of the process.

(10) The information processing device according to (9),
wherein the action information extraction unit extracts the action information from temporal modulation of light in the part of the screen.
(11) The information processing device according to (10),
wherein the action information extraction unit extracts the action information from temporal modulation of luminance or chromaticity of the light in the part of the screen.
(12) The information processing device according to (11),
wherein the captured image acquisition unit acquires the captured image generated by an image sensor adopting a rolling shutter scheme, and
the action information extraction unit specifies the temporal modulation from a difference in the luminance or the chromaticity of the light at a plurality of positions at which exposure timings are different in the captured image.
(13) The information processing device according to (12),
wherein the image sensor includes a first region to be exposed for a time of an integer multiple of a period of the temporal modulation and a second region to be exposed for a different time from the integer multiple of the period of the temporal modulation, the first region and second region being arrayed over an entire region of the captured image, and
the action information extraction unit specifies the temporal modulation from a difference between an image that does not include a temporal change in the luminance or the chromaticity of the light obtained in the first region and an image that includes the temporal change in the luminance or the chromaticity of the light obtained in the second region.
(14) The information processing device according to (9),
wherein the action information extraction unit extracts the action information from spatial modulation of the light in the part of the screen.
(15) The information processing device according to (14),
wherein the action information extraction unit cuts a code superimposed and displayed on an image of the virtual space in the part of the screen and extracts the action information by decoding the code.
(16) The information processing device according to any one of (9) to (15),
wherein the external device is different from a device used by the first user.
(17) A system including:

a first information processing device including

a display control unit configured to display a first image of a virtual space in which a first user acts,
an action information generation unit configured to generate action information indicating an action from the first user to a second user in the virtual space, and
a light modulation control unit configured to control modulation of light for displaying the first image according to the action information; and

a second information processing device including

a captured image acquisition unit configured to acquire a captured image including a screen of a device displaying the first image,
an action information extraction unit configured to extract the action information from modulation of light of the captured image in a part of the screen,
a response processing unit configured to perform a process in which the second user responds to the action, and
a display control unit configured to display a second image of the virtual space in which the second user acts according to a result of the process.

(18) The system according to c(17),
wherein the device displaying the first image includes the first information processing device.
(19) The system according to (17),

wherein the device displaying the first image is different from the first information processing device.

(20) An information processing method including:

displaying a first image of a virtual space in which a first user acts;

generating action information indicating an action from the first user to a second user in the virtual space;

controlling, by a processor, modulation of light for displaying the first image according to the action information;

acquiring a captured image including a screen of a device displaying the first image;

extracting the action information from modulation of light of the captured image in a part of the screen;

performing a process in which the second user responds to the action; and

displaying a second image of the virtual space in which the second user acts according to a result of the process.

Reference Signs List

| 10, 20, 30, 40 | system |
| 100a, 100b, 100c, 100d | game device |
| 100e | monitor |
| 111, 121 | display control unit |
| 113 | manipulation input acquisition unit |
| 115 | action information generation unit |
| 117 | light modulation control unit |
| 123 | captured image acquisition unit |
| 125 | action information extraction unit |
| 127 | response processing unit |
| 200 | network |
| 300 | server |

**Claims**

1. An information processing device comprising:

a display control unit configured to display an image of a virtual space in which a first user acts;

an action information generation unit configured to generate action information indicating an action from the first user to a second user in the virtual space; and

a light modulation control unit configured to control modulation of light for displaying the image of the virtual space according to the action information.

2. The information processing device according to claim 1,
wherein the light modulation control unit temporally modulates the light for displaying the image according to the action information.

3. The information processing device according to claim 2,
wherein the light modulation control unit temporally modulates luminance or chromaticity of the light for displaying the image according to the action information.

4. The information processing device according to claim 1,
wherein the light modulation control unit spatially modulates the light for displaying the image according to the action information.

5. The information processing device according to claim 4,
wherein the light modulation control unit superimposes and displays a code generated by encoding the action information on a part of the image.

6. The information processing device according to claim 1,
wherein the light modulation control unit realizes the control of the modulation of the light according to the action information by changing image data to be input to the display control unit.

**7.** The information processing device according to claim 1,
wherein the light modulation control unit realizes the control of the modulation of the light according to the action information by changing a control signal of a display device to be output from the display control unit.

**8.** The information processing device according to claim 1,
wherein the light modulation control unit realizes the control of the modulation of the light according to the action information by changing image data to be transmitted to an external device displaying the image toward the second user.

**9.** An information processing device comprising:

a captured image acquisition unit configured to acquire a captured image including a screen of an external device displaying a first image of a virtual space in which a first user acts;
an action information extraction unit configured to extract action information indicating an action from the first user to a second user in the virtual space, from modulation of light of the captured image in a part of the screen;
a response processing unit configured to perform a process in which the second user responds to the action; and
a display control unit configured to display a second image of the virtual space in which the second user acts according to a result of the process.

**10.** The information processing device according to claim 9,
wherein the action information extraction unit extracts the action information from temporal modulation of light in the part of the screen.

**11.** The information processing device according to claim 10,
wherein the action information extraction unit extracts the action information from temporal modulation of luminance or chromaticity of the light in the part of the screen.

**12.** The information processing device according to claim 11,
wherein the captured image acquisition unit acquires the captured image generated by an image sensor adopting a rolling shutter scheme, and
the action information extraction unit specifies the temporal modulation from a difference in the luminance or the chromaticity of the light at a plurality of positions at which exposure timings are different in the captured image.

**13.** The information processing device according to claim 12,
wherein the image sensor includes a first region to be exposed for a time of an integer multiple of a period of the temporal modulation and a second region to be exposed for a different time from the integer multiple of the period of the temporal modulation, the first region and second region being arrayed over an entire region of the captured image, and
the action information extraction unit specifies the temporal modulation from a difference between an image that does not include a temporal change in the luminance or the chromaticity of the light obtained in the first region and an image that includes the temporal change in the luminance or the chromaticity of the light obtained in the second region.

**14.** The information processing device according to claim 9,
wherein the action information extraction unit extracts the action information from spatial modulation of the light in the part of the screen.

**15.** The information processing device according to claim 14,
wherein the action information extraction unit cuts a code superimposed and displayed on an image of the virtual space in the part of the screen and extracts the action information by decoding the code.

**16.** The information processing device according to claim 9,
wherein the external device is different from a device used by the first user.

**17.** A system comprising:

a first information processing device including

a display control unit configured to display a first image of a virtual space in which a first user acts,
an action information generation unit configured to generate action information indicating an action from the first user to a second user in the virtual space, and
a light modulation control unit configured to control modulation of light for displaying the first image according to the action information; and

a second information processing device including

a captured image acquisition unit configured to acquire a captured image including a screen of a device displaying the first image,
an action information extraction unit configured to extract the action information from modulation of light of the captured image in a part of the screen,
a response processing unit configured to perform a process in which the second user responds to the action, and
a display control unit configured to display a second image of the virtual space in which the second user acts according to a result of the process.

18. The system according to claim 17,
wherein the device displaying the first image includes the first information processing device.

19. The system according to claim 17,
wherein the device displaying the first image is different from the first information processing device.

20. An information processing method comprising:

displaying a first image of a virtual space in which a first user acts;
generating action information indicating an action from the first user to a second user in the virtual space;
controlling, by a processor, modulation of light for displaying the first image according to the action information;
acquiring a captured image including a screen of a device displaying the first image;
extracting the action information from modulation of light of the captured image in a part of the screen;
performing a process in which the second user responds to the action; and
displaying a second image of the virtual space in which the second user acts according to a result of the process.

# FIG. 1

**FIG. 2**

10

FIG. 3

# FIG. 4

**FIG. 5**

(A)

(B)

FIG. 6

(A)          (B)                                    (C)

## FIG. 7

(A)

(B)

(C)

# FIG. 8

# FIG. 9

<u>20</u>

# FIG. 10

GAME DEVICE ~100

COMMUNICATION UNIT ~201

OUTPUT UNIT ~105

CONTROL UNIT ~103

INPUT UNIT ~107

STORAGE UNIT ~109

# FIG. 11

# FIG. 12

FIG. 13

EP 3 208 719 A1

## FIG. 14

34

# FIG. 15

## FIG. 16

## INTERNATIONAL SEARCH REPORT

| International application No. |
| --- |
| PCT/JP2015/072397 |

A. CLASSIFICATION OF SUBJECT MATTER

*G06F13/00*(2006.01)i, *A63F13/213*(2014.01)i, *A63F13/31*(2014.01)i, *A63F13/52* (2014.01)i, *A63F13/53*(2014.01)i

According to International Patent Classification (IPC) or to both national classification and IPC

B. FIELDS SEARCHED

Minimum documentation searched (classification system followed by classification symbols)
G06F13/00, A63F13/213, A63F13/31, A63F13/52, A63F13/53

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2012-061217 A (Furyu Corp.), 29 March 2012 (29.03.2012), paragraphs [0102] to [0107]; fig. 14 (Family: none) | 1-20 |
| Y | JP 5606653 B1 (Panasonic Intellectual Property Corporation of America), 15 October 2014 (15.10.2014), paragraphs [1151] to [1412]; fig. 334B & US 2014/0186052 A1 paragraphs [1660] to [1921]; fig. 334B & WO 2014/103155 A & EP 2858268 A1 & CN 103650383 A | 1-20 |

☐ Further documents are listed in the continuation of Box C.      ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 October 2015 (22.10.15) | 02 November 2015 (02.11.15) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013094386 A